# EUROPÄISCHE PATENTSCHRIFT

(11) **EP 3 748 328 B1**
(45) Veröffentlichungstag und Bekanntmachung des Hinweises auf die Patenterteilung: **01.06.2022**
(21) Anmeldenummer: 20169688.7
(22) Anmeldetag: 15.04.2020
(51) Int. Cl.: G01M 17/007, E05F 15/44

(54) **PRÜFVORRICHTUNG ZUR ERFASSUNG DER ANDRUCKKRAFT EINER FAHRZEUGSEITENSCHEIBE**
TEST DEVICE FOR DETECTING THE PRESSING FORCE OF A VEHICLE SIDE DISC
DISPOSITIF D'ESSAI PERMETTANT DE DÉTECTER LA FORCE DE PRESSION D'UNE VITRE LATÉRALE DE VÉHICULE

(30) Priorität: 06.06.2019 DE 102019115272
(43) Veröffentlichungstag der Anmeldung: 09.12.2020
(73) Patentinhaber: TKR Spezialwerkzeuge GmbH, 58285 Gevelsberg (DE)
(72) Erfinder: Kreischer, Torsten, 58300 Wetter (DE)
(74) Vertreter: Kalkoff & Partner Patentanwälte mbB

(56) Entgegenhaltungen:
- CN-U- 202 693 327
- JP-A- H01 311 239

## Beschreibung

Die Erfindung betrifft eine Prüfvorrichtung zur Erfassung der Andruckkraft einer an einer karosserieseitig angeordneten Scheibendichtung anliegenden Fahrzeugseitenscheibe.

Prüfvorrichtungen der eingangs genannten Art werden bei Fahrzeugen mit rahmenlosen Fahrzeugseitenscheiben, wie diese beispielsweise bei Fahrzeugtüren von Cabriolets zum Einsatz kommen, dazu genutzt, um die Andruckkraft der Fahrzeugseitenscheiben an der karosserieseitig angeordneten Scheibendichtung in der Schließlage der Tür zu ermitteln.

Bei bekannten Prüfvorrichtungen der eingangs genannten Art wird die Fahrzeugtür zunächst mit einer vollständig ausgefahrenen Fahrzeugseitenscheibe in einer definierten, von der Schließlage der Fahrzeugtür verschiedenen Prüfposition gegenüber der Fahrzeugkarosserie festgelegt. Anschließend wird in dieser Position mittels einer an der Fahrzeugseitenscheibe angeordneten Prüfvorrichtung die Position der Fahrzeugseitenscheibe relativ gegenüber der Fensterscheibendichtung ermittelt, die an der Karosserie befestigt ist. Über den an der Prüfvorrichtung ermittelten Wert kann dann indirekt die Andruckkraft der Fahrzeugseitenscheibe an der Scheibendichtung in der Schließlage der Fahrzeugtür bestimmt werden. Eine kraftbelastete Anlage der Fahrzeugseitenscheibe an der Scheibendichtung ist von wesentlicher Bedeutung, um eine Regendichtigkeit der Fahrzeugtür auch im Bereich der rahmenlosen Fahrzeugseitenscheibe zu gewährleisten.

Zur Festlegung der definierten Prüfpositionen der Kraftfahrzeugtür werden beispielsweise separate Türschließbügel verwendet, welche nur in Verbindung mit der Prüfvorrichtung zum Einsatz kommen. Diese können in das Türschloss eingeschoben werden und beabstanden dann die Fahrzeugtür gegenüber der Fahrzeugkarosserie, wobei der Türschließbügel dann fahrzeugseitig an der Karosserie anliegt. In der festgelegten Position befindet sich die Fahrzeugtür dann in einer Lage kurz vor Erreichen ihrer Schließstellung.

Derartig bekannte Prüfvorrichtungen weisen den Nachteil auf, dass diese in der Regel nur für jeweils ein Fahrzeugmodell/-typ verwendbar sind. Im Werkstattbetrieb ist es somit erforderlich, für jedes/jeden Fahrzeugmodell/-typ eine entsprechende Prüfvorrichtung vorzuhalten. Die Notwendigkeit unterschiedlicher Prüfvorrichtungen resultiert dabei u.a. aus dem Umstand der unterschiedlichen Fahrzeugseitenscheiben, der voneinander abweichenden Neigung der Fahrzeugseitenscheiben sowie der unterschiedlichen Lage der Scheibendichtungen gegenüber der Fahrzeugseitenscheibe in der Prüfposition der Fahrzeugtür. Darüber hinaus erfordern derartige Prüfvorrichtungen einen komplexen Messaufbau, um über die abgelesenen Werte eine indirekte Ermittlung der Andruckkraft zu ermöglichen. Geringe Messabweichungen führen dabei zu einer fehlerhaften Ermittlung der für die jeweilige Lage erfassten Andruckkräfte.

Hiervon ausgehend liegt der Erfindung die Aufgabe zu Grunde, eine universell einsetzbare Prüfvorrichtung bereitzustellen, die sich für unterschiedliche Fahrzeugtypen und Modelle verwenden lässt und eine zuverlässige Ermittlung der Andruckkräfte ermöglicht. Prüfvorrichtungen sind im Stand der Technik aus JP H01 311239 A und CN 202 693 327 U bekannt.

Die Erfindung löst die Aufgabe durch eine Prüfvorrichtung mit den Merkmalen des Anspruchs 1. Vorteilhafte Weiterbildungen der Erfindung sind in den abhängigen Ansprüchen angegeben.

Die erfindungsgemäße Prüfvorrichtung weist neben einer Zentraleinheit mit einer Spannungsversorgung, eine Auswerteinheit und eine Anzeigeeinheit zur Darstellung der ermittelten Andruckkraft ferner eine lösbar an der Fahrzeugseitenscheibe im Bereich der Scheibendichtung anordbare, mit der Auswerteinheit der Zentraleinheit verbundene Druckmessfolie auf.

Bei der erfindungsgemäßen Druckmessfolie handelt es sich um ein flächiges Druckmesselement, welches eine nur geringe Dicke aufweist und sich im Bereich zwischen der Scheibendichtung und der Fahrzeugseitenscheibe anordnen lässt. Zur Erfassung der Andruckkraft weist die Druckmessfolie mindestens einen Sensor auf, der in der Messposition zwischen der Fahrzeugseitenscheibe und der Scheibendichtung angeordnet ist.

Zur Übertragung der von dem oder den Sensoren ermittelten Messwerte ist die Druckmessfolie über geeignete Leitungen mit der Auswerteinheit der Zentraleinheit verbunden, in der die Messwerte ausgewertet werden. Nach Auswertung der Messdaten wird die ermittelte Andruckkraft über eine mit der Auswerteinheit verbundene Anzeigeeinheit der Zentraleinheit angezeigt. Ggf. aufgrund der Dicke der Druckmessfolie vorliegende Einflüsse auf den Anpressdruck können durch die Auswerteinheit bereinigt werden, wobei aufgrund einer bevorzugt nur geringen Dicke der Druckmessfolie von wenigen Zehntel Millimetern, diese einen nur zu vernachlässigenden Einfluss auf den ermittelten Anpressdruck ausübt.

Die Anzeige der ermittelten Andruckkraft erfolgt über die an die Auswerteinheit angeschlossene Anzeigeeinheit. Dabei besteht die Möglichkeit, sowohl die ermittelten Werte anzugeben als auch stattdessen nur anzuzeigen, dass die ermittelte Andruckkraft innerhalb einer vorgegebenen Bandbreite liegt. Hierzu kann die Auswerteinheit mit einer Speichereinheit verbunden sein, in welcher die jeweiligen Referenzwerte zum Abgleich hinterlegt sind. Die Anzeige erfolgt dann bspw. in Form einer Anzeige "in Ordnung" oder "nicht in Ordnung", wobei bevorzugt dann zur Information des Nutzers noch angezeigt werden kann, ob die Andruckkraft zu hoch oder zu gering ist. Als Anzeigeeinheit können bspw. beliebige Displays verwendet werden.

Durch die erfindungsgemäße Prüfeinheit kann zuverlässig überprüft werden, ob die rahmenlose Fahrzeugseitenscheibe gleichmäßig und bündig an der Scheibendichtung anliegt, wodurch Windgeräusche minimiert und ein Wassereintritt vermieden werden. Eine ggf. erforderliche Anpassung der Andruckkraft der Fahrzeugseitenscheiben lässt sich mit geeigneten Werkzeugen vornehmen, wobei hiernach die Prüfvorrichtung die zuverlässige Möglichkeit bietet, die Andruckkräfte auf ihre Korrektheit hin zu überprüfen.

Die Ausgestaltung der Druckmessfolie mit Druckmesssensoren ist grundsätzlich frei wählbar, wobei bereits mit einer nur einen Druckmesssensor aufweisenden Druckmessfolie die Ermittlung einer im Bereich dieses Druckmesssensors anliegenden Andrucckraft ermittelt werden kann. Nach einer vorteilhaften Weiterbildung der Erfindung ist jedoch vorgesehen, dass die Druckmessfolie mehrere Druckmesssensoren aufweist.

Die Verwendung einer mehrere Druckmesssensoren aufweisenden Druckmessfolie erlaubt es, mit einer einzigen Druckmessfolie an verschiedenen Punkten die Andrucckraft zu ermitteln. Insbesondere besteht durch die Verwendung einer Druckmessfolie mit mehreren Druckmesssensoren die Möglichkeit, die Druckmessfolie derart an der Fahrzeugseitenscheibe anzuordnen, dass diese den oberen Rand umschließt, sodass in der Schließlage der Fahrzeugseitenscheibe die außenseitig, stirnseitig und innenseitig durch die Scheibendichtung auf die Fahrzeugseitenscheibe ausgeübte Andruckkraft mit einer Druckmessfolie ermittelt werden kann. Auch besteht mit einer Druckmessfolie mit mehreren Druckmesssensoren die Möglichkeit, die auf eine Seite der Fahrzeugscheibe wirkende Andruckkraft an mehreren Stellen zu ermitteln.

Erfindungsgemäß ist die Druckmessfolie mit einem Positionierungselement, bspw. in Form einer Lehre, verbunden, welche eine exakte Positionierung der Druckmessfolie an den vorgegebenen Messpunkten gewährleistet. Bei den Positionierungselementen kann es sich auch um eine die Fahrzeugseitenscheibe umgreifende, mit der Druckmessfolie verbundene Klammer handeln, welche nach ihrer Positionierung an einer Fahrzeugseitenscheibe eine exakte Ausrichtung der Druckmessfolie gegenüber der Fahrzeugseitenscheibe sicherstellt.

Nach einer weiteren Ausgestaltung der Erfindung ist vorgesehen, dass die Druckmessfolie und/oder das Positionierungselement Ausrichtelemente, insbesondere Markierungen zur Ausrichtung der Druckmessfolie an der Fahrzeugseitenscheibe aufweist. Die Verwendung von Ausrichtelementen, bei denen es sich bspw. um Strichmarkierungen auf einer transparent ausgebildeten Druckmessfolie handeln kann, erleichtern eine exakte Positionierung der Druckmessfolie an der Fahrzeugseitenscheibe, insbesondere, wenn diese hierzu mit für die Messung korrespondierenden Markierungen zur Ausrichtung der Druckmessfolie versehen ist.

In einer besonders einfachen Ausgestaltung kann diese bspw. nach ihrer Ausrichtung mit geeigneten Klebebändern fixiert werden oder auf den Scheibenrand aufgesteckt werden. Nach einer besonders vorteilhaften Ausgestaltung der Erfindung ist jedoch vorgesehen, dass die Druckmessfolie zur adhäsiven Anordnung an der Fahrzeugseitenscheibe ausgebildet ist. Diese Ausgestaltung der Erfindung ermöglicht es, auf zusätzliche Befestigungselemente zu verzichten. Die adhäsive Verbindung stellt dabei eine sichere und zuverlässige Positionierungsmöglichkeit dar, wobei nach Beendigung der Messung die Druckmessfolie in einfacher Weise zerstörungsfrei von der Fahrzeugseitenscheibe entfernt und für spätere Messvorgänge verwendet werden kann.

Nach einer weiteren Ausgestaltung der Erfindung ist vorgesehen, dass die Zentraleinheit zum gleichzeitigen Anschluss von zwei, bevorzugt drei, besonders bevorzugt vier Druckmessfolien an der Auswerteinheit ausgebildet ist. Diese Ausgestaltung der Erfindung ermöglicht es, mit der Zentraleinheit gleichzeitig über an verschiedenen Punkten der Fahrzeugseitenscheibe angeordneten Druckmessfolien die jeweilige Andruckkraft zu ermitteln. Diese Ausgestaltung der Erfindung ermöglicht es somit, mit einem einzigen Messvorgang an vorgegebenen Messpunkten die Andruckkraft zu ermitteln, sodass auf einen andernfalls erforderlichen Umbau der Druckmessfolie zur aufeinanderfolgenden Ermittlung der Andruckkraft an den vorgegebenen Messpunkten verzichtet werden kann.

Die Art der Ausgabe der ermittelten Andruckkräfte an der Anzeige kann grundsätzlich in beliebiger Weise erfolgen. Neben einer lediglich dem Nutzer anzeigenden Korrektheit der ermittelten Andruckkräfte durch Abgleich mit einer geeigneten Datenbank besteht auch die Möglichkeit, die ermittelten Andruckkräfte direkt anzuzeigen. Nach einer Weiterbildung der Erfindung ist dabei vorgesehen, dass die Anzeigeeinheit zur aufeinanderfolgenden und/oder gleichzeitigen Darstellung der ermittelten Andruckkräfte einer oder mehrerer mit der Auswerteinheit verbundener Druckmessfolien ausgebildet ist. Diese Ausgestaltung der Erfindung ermöglicht dem Nutzer eine sofortige und exakte Erfassung der ermittelten Andruckkräfte, wobei insbesondere bei einer gleichzeitigen Anzeige der Andruckkräfte in besonders schneller Weise festgestellt werden kann, ob diese innerhalb der vorgegebenen Parameter liegen. Auch besteht die Möglichkeit, dass die Auswerteinheit die einzelnen Ergebnisse nach einer vorgelegten Anzeigedauer nacheinander wiedergibt.

Die Ausgestaltung der Druckmessfolie ist grundsätzlich frei wählbar. Nach einer besonders vorteilhaften Ausgestaltung der Erfindung ist jedoch vorgesehen, dass diese flexibel ausgebildet ist. Die Verwendung einer flexiblen Druckmessfolie erleichtert die Anordnung an der Fahrzeugseitenscheibe und ermöglicht überdies eine besonders gute Anpassung an die Form der Fahrzeugseitenscheibe. Zudem gewährleistet die flexible Ausgestaltung eine flächige Anlage der Druckmesssensoren an der Fahrzeugseitenscheibe.

Die Ausgestaltung der Zentraleinheit sowie des Positionierungselements ist grundsätzlich frei wählbar. Bei der Zentraleinheit kann es sich bspw. auch um ein Mobiltelefon, ein Tablet oder dergleichen handeln. Darüber hinaus besteht die Möglichkeit, die Zentraleinheit in einem kastenförmigen Gehäuse mit einer in das Gehäuse integrierten Anzeigeeinheit auszubilden. Nach einer besonders vorteilhaften Ausgestaltung der Erfindung ist dabei vorgesehen, dass die Zentraleinheit und/oder das Positionierungselement lösbar an der Fahrzeugkarosserie und/oder Fahrzeugseitenscheibe befestigbar ist. Eine lösbare Befestigung erlaubt es dem Nutzer, die Zentraleinheit so zu positionieren, dass diese bei der Durchführung der Messungen ortsfest an der Fahrzeugseitenscheibe angeordnet sind und einen zuverlässigen Blick auf die Anzeigeeinheit ermöglichen. Ein mögliches Mittel zur lösbaren Anordnung an der Fahrzeugseitenscheibe stellt bspw. ein mit der Zentraleinheit und/oder dem Positionierungselement verbundener Saugnapf dar. Dieser erlaubt eine besonders einfache und komfortable lösbare Anordnung der Zentraleinheit und/oder des Positionierungselements an der Fahrzeugseitenscheibe.

Die Spannungsversorgung der Anzeigeeinheit, Auswerteinheit sowie Druckmessfolien kann grundsätzlich in beliebiger Weise erfolgen. Eine mögliche Ausgestaltung hierzu sieht bspw. die Anordnung eines Speicherakkus in der Zentraleinheit vor, wobei dieser nach der Nutzung über geeignete Anschlüsse wieder aufladbar ist. Nach einer besonders vorteilhaften Ausgestaltung der Erfindung ist jedoch vorgesehen, dass die Zentraleinheit zum Anschluss an eine externe Spannungsversorgung ausgebildet ist. Die Möglichkeit zur Verbindung der Zentraleinheit an eine externe Spannungsversorgung gewährleistet einen zuverlässigen Betrieb der Auswerteinheit, Anzeigeeinheit und Druckmessfolien. Besonders vorteilhaft ist eine Kombination, bei der die Spannungsversorgung sowohl über einen integrierten Speicherakku als auch über eine externe Spannungsversorgung erfolgen kann.

Ein Ausführungsbeispiel der Erfindung wird nachstehend mit Bezug auf eine Figur erläutert. In den Zeichnungen zeigt:

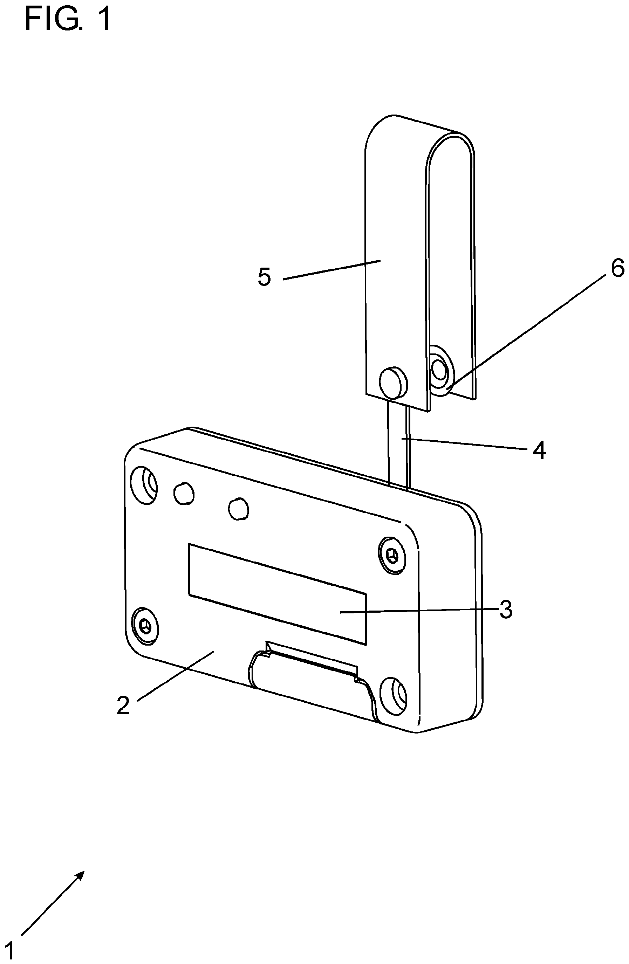

- Fig. 1: in einer perspektivischen Ansicht eine Prüfvorrichtung zur Ermittlung einer Andruckkraft einer Fahrzeugseitenscheibe an eine Scheibendichtung.

Figur 1 zeigt eine perspektivische Ansicht einer Prüfvorrichtung 1, welche zur Ermittlung der Andruckkraft einer hier nicht dargestellten Fahrzeugseitenscheibe an einer ebenfalls nicht dargestellten Scheibendichtung dient. Zur Ermittlung der Andruckkraft weist die Prüfvorrichtung 1 eine Zentraleinheit 2 auf, welche über eine hier nicht dargestellte, in die Zentraleinheit 2 integrierte Auswerteinheit über eine Leitung, welche in einen Verbindungssteg 4 integriert ist, mit einer Druckmessfolie der Prüfvorrichtung 1 verbunden ist.

Der Verbindungssteg 4 verbindet die Auswerteinheit mit der mehrere, hier nicht dargestellte Druckmesssensoren aufweisenden Druckmessfolie, welche in dem dargestellten Ausführungsbeispiel mit einem als Klammer 5 ausgebildeten Positionierungselement verbunden ist. Die Klammer 5 ermöglicht eine Anordnung der Druckmessfolie derart, dass diese den Fahrzeugscheibenrand umgreift, so dass die Druckmessfolie 4 abschnittsweise an einer Scheibeninnenseite, der Scheibenaußenseite sowie einer Stirnseite der Fahrzeugseitenscheibe 1 anliegt. Innenseitig gegenüberliegend an der Klammer 5 angeordnete Saugnäpfe 6 ermöglichen eine exakte Ausrichtung und Festlegung der Druckmessfolie an der Fahrzeugseitenscheibe.

Im geschlossenen Zustand der Fahrzeugseitenscheibe ist die Druckmessfolie an allen Seiten durch die Scheibendichtung belastet. Mittels über die Fläche der Druckmessfolie verteilt angeordneter Druckmesssensoren kann somit die Andruckkraft der Fahrzeugseitenscheibe an die Scheibendichtung an allen Seiten ermittelt werden.

Eine Auswertung der ermittelten Daten erfolgt über die Auswerteinheit der Zentraleinheit 2, welche die ermittelten Ergebnisse über eine LED Anzeige einer Anzeigeeinheit 3 der Zentraleinheit 2 ausgibt.

Die Ausgabe der Druckmessergebnisse kann dabei für den Nutzer in Form einer exakten Werteangabe erfolgen. Alternativ besteht die Möglichkeit, dem Nutzer die Richtigkeit der ermittelten Andruckkräfte oder deren Abweichung von vorgegebenen Werten durch eine einfache Anzeige "OK" oder "Nicht OK" zu signalisieren. Ggf. weist die Zentraleinheit 2 eine Speichereinheit auf, in der für den jeweiligen Fahrzeugtyp die vorgegebenen Andruckkräfte hinterlegt sind, sodass durch die Auswerteinheit ein Abgleich mit den ermittelten Messdaten vorgenommen werden kann. Die Zentraleinheit 2 kann auch zur Verbindung, insbesondere drahtlosen Verbindung, mit einer externen Speichereinheit ausgebildet sein.

### Bezugszeichenliste

- 1: Prüfvorrichtung
- 2: Zentraleinheit
- 3: Anzeigeeinheit
- 4: Verbindungssteg
- 5: Positionierungselement / Klammer
- 6: Saugnapf

## Patentansprüche

1. Prüfvorrichtung zur Erfassung einer Andruckkraft einer an einer karosserieseitig angeordneten Scheibendichtung anliegenden Fahrzeugseitenscheibe, **gekennzeichnet durch**
- eine Zentraleinheit (2) aufweisend eine Spannungsversorgung, eine Auswerteinheit und eine Anzeigeeinheit (3) zur Darstellung der ermittelten Andrucckraft und
- eine lösbar an der Fahrzeugseitenscheibe im Bereich der Scheibendichtung anordbaren, mit der Auswerteeinheit der Zentraleinheit (2) verbundenen Druckmessfolie, wobei die Druckmessfolie ein Positionierungselement (5) zur lösbaren Anordnung an der Fahrzeugseitenscheibe aufweist.

2. Prüfvorrichtung nach Anspruch 1, **dadurch gekennzeichnet, dass** die Druckmessfolie mehrere Druckmesssensoren aufweist.

3. Prüfvorrichtung nach einem oder mehreren der vorhergehenden Ansprüche, **dadurch gekennzeichnet, dass** die Druckmessfolie und/oder das Positionierungselement (5) Ausrichtelemente, insbesondere Markierungen zur Ausrichtung der Druckmessfolie an der Fahrzeugseitenscheibe aufweist.

4. Prüfvorrichtung nach einem oder mehreren der vorhergehenden Ansprüche, **dadurch gekennzeichnet, dass** die Druckmessfolie zur adhäsiven Anordnung an der Fahrzeugseitenscheibe ausgebildet ist.

5. Prüfvorrichtung nach einem oder mehreren der vorhergehenden Ansprüche, **dadurch gekennzeichnet, dass** die Zentraleinheit (2) zum gleichzeitigen Anschluss von zwei, bevorzugt drei, besonders bevorzugt vier Druckmessfolien an die Auswerteinheit ausgebildet ist.

6. Prüfvorrichtung nach einem oder mehreren der vorhergehenden Ansprüche, **dadurch gekennzeichnet, dass** die Anzeigeeinheit zur aufeinanderfolgenden und/oder gleichzeitigen Darstellung der ermittelten Andruckkräfte einer oder mehrerer mit der Auswerteinheit verbundener Druckmessfolien ausgebildet ist.

7. Prüfvorrichtung nach einem oder mehreren der vorhergehenden Ansprüche, **dadurch gekennzeichnet, dass** die Druckmessfolie und/oder das Positionierungselement (5) flexibel ist.

8. Prüfvorrichtung nach einem oder mehreren der vorhergehenden Ansprüche, **dadurch gekennzeichnet, dass** die Zentraleinheit (2) lösbar an der Fahrzeugkarosserie und/oder Fahrzeugseitenscheibe (1) befestigbar ist.

9. Prüfvorrichtung nach einem oder mehreren der vorhergehenden Ansprüche, **dadurch gekennzeichnet, dass** die Zentraleinheit (2) zum Anschluss an eine externe Spannungsversorgung ausgebildet ist.

## Claims

1. A testing device for detecting a pressing force of a vehicle side window adjoining a window seal arranged on a bodywork, **characterized by**
- a central unit (2) comprising a power supply, an evaluation unit and a display unit (3) for displaying the determined pressing force, and
- a pressure-measuring film that can be arranged in a removable manner on the vehicle side window in the region of the window seal and that is connected to the evaluation unit of the central unit (2), wherein the pressure-measuring film comprises a positioning element (5) for removable arrangement on the vehicle side window.

2. The testing device according to claim 1, **characterized in that** the pressure-measuring film comprises multiple pressure-measuring sensors.

3. The testing device according to one or more of the preceding claims, **characterized in that** the pressure-measuring film and/or the positioning element (5) comprises alignment elements, in particular markings for aligning the pressure-measuring film on the vehicle side window.

4. The testing device according to one or more of the preceding claims, **characterized in that** the pressure-measuring film is designed for adhesive arrangement on the vehicle side window.

5. The testing device according to one or more of the preceding claims, **characterized in that** the central unit (2) is designed for the simultaneous connection of two, preferably three, particularly preferably four pressure-measuring films to the evaluation unit.

6. The testing device according to one or more of the preceding claims, **characterized in that** the display unit (3) is designed to successively and/or simultaneously display the determined pressing forces of one or more pressure-measuring films connected to the evaluation unit.

7. The testing device according to one or more of the preceding claims, **characterized in that** the pressure-measuring film and/or the positioning element (5) is/are flexible.

8. The testing device according to one or more of the preceding claims, **characterized in that** the central unit (2) can be removably fastened to the vehicle bodywork and/or vehicle side window (1).

9. The testing device according to one or more of the preceding claims, **characterized in that** the central unit (2) is designed for connection to an external power supply.

## Revendications

1. Dispositif d'essai permettant de détecter une force de pression d'une vitre latérale de véhicule appliquée sur un joint de vitre disposé côté carrosserie, **caractérisé par**
- une unité centrale (2) présentant une alimentation en tension, une unité d'évaluation et une unité d'affichage (3) permettant de représenter la force de pression déterminée et
- une feuille de mesure de pression reliée à l'unité d'évaluation de l'unité centrale (2) et apte à être disposée de façon amovible sur la vitre latérale de véhicule dans la région du joint de vitre, la feuille de mesure de pression présentant un élément de positionnement (5) pour l'agencement amovible sur la vitre latérale de véhicule.

2. Dispositif d'essai selon la revendication 1, **caractérisé en ce que** la feuille de mesure de pression présente plusieurs capteurs de mesure de pression.

3. Dispositif d'essai selon l'une ou plusieurs des revendications précédentes, **caractérisé en ce que** la feuille de mesure de pression et/ou l'élément de positionnement (5) présente des éléments d'alignement, en particulier des marquages pour l'aligner de la feuille de mesure de pression sur la vitre latérale de véhicule.

4. Dispositif d'essai selon l'une ou plusieurs des revendications précédentes, **caractérisé en ce que** la feuille de mesure de pression est conçue pour être disposée de façon adhésive sur la vitre latérale de véhicule.

5. Dispositif d'essai selon l'une ou plusieurs des revendications précédentes, **caractérisé en ce que** l'unité centrale (2) est conçue pour le raccordement simultané de deux, de préférence trois et de façon particulièrement préférée quatre feuilles de mesure de pression sur l'unité d'évaluation.

6. Dispositif d'essai selon l'une ou plusieurs des revendications précédentes, **caractérisé en ce que** l'unité d'affichage (3) est conçue pour une représentation successive et/ou simultanée des forces de pression déterminées d'une ou de plusieurs feuilles de mesure de pression reliées à l'unité d'évaluation.

7. Dispositif d'essai selon l'une ou plusieurs des revendications précédentes, **caractérisé en ce que** la feuille de mesure de pression et/ou l'élément de positionnement (5) est/sont souple(s).

8. Dispositif d'essai selon l'une ou plusieurs des revendications précédentes, **caractérisé en ce que** l'unité centrale (2) peut être fixée de façon amovible à la carrosserie de véhicule et/ou à la vitre latérale de véhicule (1).

9. Dispositif d'essai selon l'une ou plusieurs des revendications précédentes, **caractérisé en ce que** l'unité centrale (2) est conçue pour être raccordée à une alimentation en tension externe.
